# EUROPEAN PATENT SPECIFICATION

(11) **EP 0 673 797 B1**
(45) Date of publication and mention of the grant of the patent: **27.01.1999**
(21) Application number: 95301382.8
(22) Date of filing: 03.03.1995
(51) Int. Cl.: B60J 7/06

(54) **Opening roof for vehicle**
Öffnungsfähiges Fahrzeugdach
Toit ouvrant pour véhicule

(30) Priority: 25.03.1994 GB 9406009
(43) Date of publication of application: 27.09.1995
(73) Proprietor: Inalfa Industries B.V., 5804 AB Venray (NL)
(72) Inventor: Betteridge, Timothy David, Erdington, Birmingham B24 0DJ (GB)
(74) Representative: de Vries, Johannes Hendrik Fokke

(56) References cited:
- EP-A- 0 376 203
- DE-A- 3 723 598
- FR-A- 1 238 055
- US-A- 1 697 073

## Description

This invention relates to an opening roof according to the preamble of claim 1

An opening roof of this type is disclosed in GB-A-1313499. The cover is rigidly secured to the rear edge of the opening, with the result that the locking means acts against the natural elasticity of the flexible sheet material of the cover. Consequently, the actual tension in the cover when fully closed is critically dependent on the accuracy of manufacture of the cover to its specified size; small departures from such specified size leading to relatively large variations in the tension in the cover when fully closed, and therefore of the force necessary to close it. It is an object of the present invention to provide an opening roof of the type described above which is not subject to this disadvantage.

FR-A-1.238.055 discloses a truck having a flexible roof cover including a tensioning mechanism.

According to the invention, the opening roof has the features of the characterizing portion of claim 1.

In one form of the invention, the rear cross member is slidably mounted on a pair of rods which extend longitudinally between the rear edge of the opening and a static transverse frame member extending across the opening in front of the rear edge thereof.

An embodiment of the invention will now be described, by way of example, with reference to the accompanying drawings, in which:
Figure 1 is a perspective view of the upper part of a car body fitted with an opening roof in accordance with the invention;
Figure 2 is a perspective view of the rear part of a static frame for the opening roof shown in Figure 1, with the rear cross member in place but the fabric cover and the other cross members removed; and
Figure 3 is a cross-sectional view taken on the line 3-3 in Figure 1.

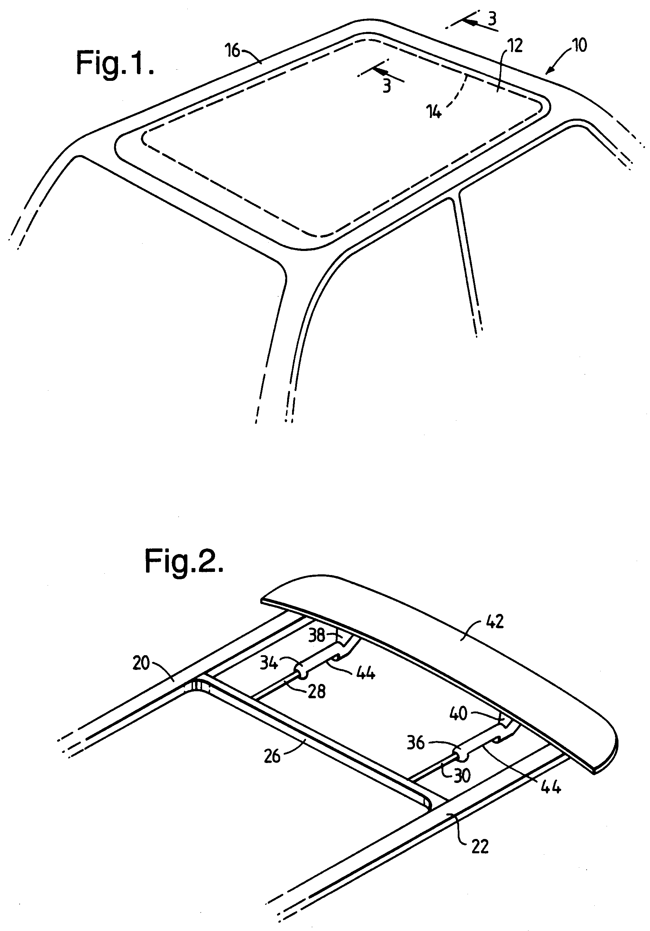

Referring to Figure 1, a motor car 10 has an opening roof comprising a folding fabric cover 12 extending over an opening 14 in the vehicle roof 16. When closed, the front edge of the cover 12 is secured to the front edge of the opening 14, for example by a catch as disclosed in GB-A-1313499.

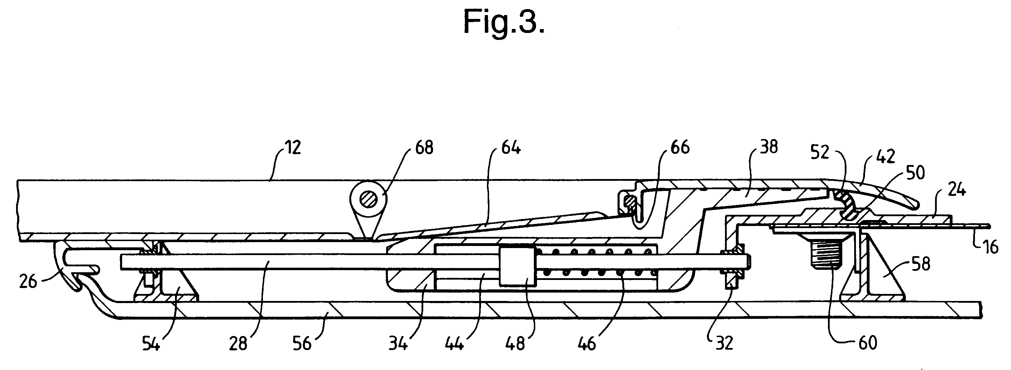

Referring to Figures 2 and 3, the roof opening 14 is bounded by an extruded aluminium frame comprising a front frame member (not shown), a pair of side frame members 20 and 22 (Figure 2) and a rear frame member 24 (Figure 3). A transverse rail 26 extends between the side frame members 20 and 22 at a location in front of the rear frame member 24.

Two mutually parallel tie rods 28 and 30 extend between the transverse rail 26 and a downwardly extending flange 32 on the rear frame member 24. A respective slider 34, 36 is mounted on each tie rod 28, 30. Each slider 34, 36 has a respective upwardly and rearwardly extending projection 38, 40 which projects above the level of the vehicle roof 16 and supports a rear cross member 42 to which the rear edge of the cover 12 is permanently secured. The part of each slider 34, 36 through which the corresponding rod 28, 30 projects includes a pocket 44 containing a compression spring 46 (Figure 3) which engages between the rear end of the pocket 44 and a stop 48 which is clamped on the corresponding rod 28, 30. The compression springs 46 thus bias the rear cross member 42 rearwardly and, when the cover is closed and the front cross member secured to the front edge of the opening 14, ensure that a predetermined tension is applied to the cover 12. The rear rail 24 extends behind the rear edge of the rear cross member 42 so as to prevent damage to the paint on the vehicle roof 16 caused by movement of the rear cross member 42.

The rear cross member 24 has a groove in its upper surface which receives an enlarged formation 50 on the bottom end of a resilient seal 52. The upper end of the seal 52 abuts against the bottom surface of the rear cross member 42 to prevent ingress of water under the cover 12 from the rear.

As can be seen from Figure 3, the transverse rail 26 also supports an elongate bracket 54 on which the head lining 56 of the vehicle roof is mounted. A comparable elongate bracket 58, which supports the head lining 52 below the rear edge of the opening 14, is mounted on the underside of the vehicle roof 16 by bolts 60 which also serve to secure the rear frame member 24 to the vehicle roof 16.

Figure 3 also shows an inner head lining 64 below the fabric cover 12, the rear end of which is secured in a groove 66 in a downwardly extending projection on the front edge of the rear cross member 42. The head lining 64 extends forwardly and is attached to the bottom end of successive cross members such as the cross member 68. When the cover 12 is tensioned, the head lining 64 rests on the rail 26 but is not secured thereto.

When the cover 12 is fully open, the front edge of the front cross member (not shown) is located in front of the transverse rail 26, the space between this rail 26 and the rear edge of the opening 14 in the vehicle roof being covered by the folds of the opened cover 12.

## Claims

1. An opening roof for a passenger car in which an opening in the vehicle roof (16) is provided with a cover (12) formed of flexible sheet material which is supported by cross members (68) adapted to slide on guides extending along each side of the opening and has its front edge secured to a front cross member which is movable to and fro to open and close the opening roof and which incorporates locking means for engagement with a co-operating part of the vehicle roof at the front edge of the opening so as to draw the front cross member forwardly to tighten the flexible cover (12) to its closed position, characterised in that the rear edge of the flexible cover is secured to a rear cross member (42) which is resiliently biassed in the rearward direction by biassing means, the rear edge of the rear cross member (42) being located above and behind the rear edge of the opening, whereas a flexible seal (52) engages between the rear cross member (42) and a frame member (32) fixed to the rear edge of the opening.

2. An opening roof according to claim 1, wherein the rear cross member (42) is slidably mounted on a pair of guide members (28, 30) which extend longitudinally between the rear edge of the opening and a static transverse frame member (26) extending across the opening in front of the rear edge thereof.

## Patentansprüche

1. Schiebedach für einen Personenkraftwagen, wobei eine Öffnung in einem Fahrzeugdach (16) mit einer Abdeckung (12) aus elastischem, textilem Material versehen ist, die von Querträgern (68) gehalten wird, die auf jeweils an der Seite der Öffnung verlaufenden Führungen verschiebbar sind, und die mit ihrem vorderen Rand an einem vorderen Querträger festgelegt ist, der hin- und herbewegbar ist, so daß sich das Schiebedach öffnen und schließen läßt, und die eine Schließeinrichtung aufweist, die sich mit einem damit zusammenwirkenden Teil des Fahrzeugdachs am vorderen Rand der Öffnung in Eingriff bringen läßt, so daß der vordere Querträger nach vorn gezogen wird und die elastische Abdeckung in ihrer Schließstellung spannt, dadurch gekennzeichnet, daß der hintere Rand der elastischen Abdeckung an einem hinteren Querträger (42) festgelegt ist, der von einer Federeinrichtung in rückwärtiger Richtung mit Federkraft beaufschlagt wird, wobei der hintere Rand des hinteren Querträgers (42) über und hinter dem hinteren Rand der Öffnung angeordnet ist, und eine elastische Dichtung (52) zwischen dem hinteren Querträger (42) und einem am hinteren Rand der Öffnung festgelegten Rahmenglied (32) im Eingriff mit diesen angeordnet ist.

2. Schiebedach nach Anspruch 1, wobei der hintere Querträger (42) verschiebbar an zwei Führungsgliedern (28, 30) angebracht ist, die sich in Längsrichtung zwischen dem hinteren Rand der Öffnung und einem feststehenden, quer verlaufenden Rahmenglied (26) erstrecken, das vor dem hinteren Rand der Öffnung über diese hinweg verläuft.

## Revendications

1. Toit ouvrant pour véhicule de tourisme dans lequel il est ménagé une ouverture dans le toit du véhicule (16), ouverture comportant une couverture (12) constituée d'un matériau sous forme de feuille souple montée sur des éléments transversaux (68) pouvant coulisser sur des glissières s'étendant de chaque côté de l'ouverture et comportant son bord frontal fixé sur un élément transversal frontal qui est mobile en mouvement de va-et-vient pour ouvrir et fermer l'ouverture du toit et qui incorpore des moyens de verrouillage pour l'engagement avec une partie coopérante du toit du véhicule sur le côté avant de l'ouverture de façon à amener l'élément transversal sur l'avant pour bloquer le couvercle souple (12) sur sa position fermée, caractérisé en ce que le bord arrière du couvercle souple est fixé sur un élément transversal arrière (42) qui est sollicité élastiquement dans la direction arrière par des moyens de sollicitation, le bord arrière de l'élément transversal arrière (42) étant situé au-dessus et derrière le bord arrière de l'ouverture, tandis qu'un joint d'étanchéité souple (52) s'engage entre l'élément transversal arrière (42) et un élément de châssis (32) fixé sur le bord arrière de l'ouverture.

2. Toit ouvrant selon la revendication 1, dans lequel l'élément transversal arrière (42) est monté de façon coulissante sur une paire d'éléments de guidage (28, 30) qui s'étendent longitudinalement entre le bord arrière de l'ouverture et un élément de châssis transversal statique (26) s'étendant sur l'ouverture devant son bord arrière.
